Europäisches Patentamt

European Patent Office

Office européen des brevets

(19)

(11) Numéro de publication: **0 240 393 B1**

(12) **FASCICULE DE BREVET EUROPEEN**

(45) Date de publication du fascicule du brevet:
26.07.89

(51) Int. Cl.⁴: **A01K 13/00, A45D 24/22**

(21) Numéro de dépôt: **87400498.9**

(22) Date de dépôt: **06.03.87**

(54) **Appareil destiné à soigner le pelage des animaux.**

(30) Priorité: **11.03.86 FR 8603715**

(43) Date de publication de la demande:
**07.10.87 Bulletin 87/41**

(45) Mention de la délivrance du brevet:
**26.07.89 Bulletin 89/30**

(84) Etats contractants désignés:
**BE CH DE FR GB IT LI NL**

(56) Documents cités:
**FR-A- 1 536 475**
**FR-A- 2 277 546**
**US-A- 2 648 867**
**US-A- 3 964 501**
**US-A- 4 376 441**
**US-A- 4 485 583**

(73) Titulaire: **Freulon, Claude, 27, rue Henri Lafosse,
F-76000 Rouen(FR)**

(72) Inventeur: **Freulon, Claude, 27, rue Henri Lafosse,
F-76000 Rouen(FR)**

(74) Mandataire: **Moncheny, Michel et al, c/o Cabinet
Lavoix 2 Place d'Estienne d'Orves, F-75441 Paris
Cedex 09(FR)**

ACTORUM AG

## Description

La présente invention concerne un appareil destiné à soigner le pelage des animaux, comprenant un boîtier de section approximativement rectangulaire, un raccord servant de poignée pour liaison à un dispositif d'aspiration, une chambre d'aspiration et un peigne.

Il existe dans l'état de la technique peu d'appareils pour effectuer des traitements sur le pelage des animaux. On connaît des peignes dont certaines dents sont creuses et permettent d'insuffler des produits de traitement. On connaît également des séchoirs pour injecter de l'air tiéde dans le pelage, combiné avec un dispositif de ramassade des poils. Pour les cheveux des êtres humains, le brevet FR-A 1 536 475 décrit un peigne associé à un boîtier aspirant.

Par ailleurrs, on connaît également d'après le document US-A 3 964 501, un dispositif formé d'un boîtier creux cloisonné en deux chambres, une première chambre disposée le long d'un peigne, et une deuxième chambre contigue à la première, et contenant un dispositif de distribution d'un produit de traitement.

L'inconvénient majeur des appareils de l'état de la technique destinés à traiter le pelage des animaux réside dans le fait que la chambre où s'effectue le traitement se charge en poussière, poils ou en produits de traitement, d'où il résulte un risque d'allergie des voies respiratoires des animaux. Par ailleurs, si l'on désire effectuer un traitement complet, plusieurs opérations successives sont à effectuer.

Le but de l'invention est donc de résoudre ces problèmes en proposant un appareil permettant de faire un traitement en une seule opération et qui soit simple et d'un prix de revient peu élevé.

A cet effet, l'invention a pour objet un appareil destiné à soigner le pelage des animaux comprenant un boîtier creux, un raccord servant de poignée pour liaison à un dispositif d'aspiration, le boîtier creux comportant une première chambre d'aspiration et un peigne, caractérisé en ce que le boîtier creux est cloisonné de façon à avoir une deuxième chambre dans laquelle est disposé un dispositif de distribution de produit de traitement avec une sortie en direction du peigne et en ce que lesdites chambres sont complètement séparées et disposées de part et d'autre du peigne de manière que le produit de traitement sortant de la deuxième chambre soit aspiré vers le peigne sous l'effet de l'aspiration de la première chambre.

Selon un mode de réalisation de l'invention de dispositif de distribution de produit de traitement est constitué par un dispositif du pulvérisation destiné à projeter vers le peigne en avant de celui-ci est dans le flux d'air aspiré, le produit de traitement.

Dans ce cas le dispositif de pulvérisation inséré dans la deuxième chambre comprendra par exemple une rampe percée d'orifices calibrés en fonction du produit à répartir et dont une extrémité est fermée et l'autre, reliée à un récipient sous pression muni d'un clapet et disposé dans une troisième chambre située à proximité de la poignée de l'appareil, de façon à permettre à l'utilisateur d'agir sur le fond du récipient pendant le traitement pour faire fonctionner le clapet et envoyer dans la rampe la quantité voulue de produit de traitement. Les orifices de la rampe seront orientés vers le peigne à travers une ouverture pratiquée dans le boîtier, au-niveau de la deuxième chambre. La chambre d'aspiration, située de l'autre côté du peigne aura ses orifices placés derrière celui-ci et de part et d'autre d'au moins une brosse permettant de finir le traitement en enlevant l'excès de produit de traitement ainsi que les poils détachés, la poussière et les corps étrangers, en lissant le pelage et en permettant ainsi une meilleure pénétration du produit restant, dans le pelage.

Selon un autre mode de réalisation le dispositif de distribution comprend une cartouche de produit de traitement, par exemple en poudre, dans laquelle est ménagé un certain nombre d'ouvertures de distribution de produit.

Selon la nature du pelage à traiter et en fonction notamment de l'épaisseur et de la dimension des poils on devra adapter le peigne et la brosse, et par conséquent ceux-ci seront amovibles par exemple en les faisant coulisser longitudinalement dans des glissières ménagées à cet effet dans le corps du boîtier, lui-même exécuté en une matière plastique robuste. Le boîtier comporte également un bossage situé sous la poignée en avant de la brosse et du peigne pour permettre de faire reposer l'appareil sur le pelage pendant les soins tout en évitant un enfoncement exagéré du peigne et de provoquer une sorte de massage.

Enfin, si on ne désire pas pulvériser de produit ni utiliser de produit en poudre, il est également possible d'utiliser des produits de traitement sous forme de gel solidifié. A cet effet il est prévu de pouvoir insérer dans la deuxième chambre, à proximité de l'orifice de sortie ménagé pour le jet pulvérisé, les morceaux de gel, ou d'utiliser cette chambre pour y introduire une cartouche de gel solidifié de produit de traitement, les molécules contenues dans le gel se diffusant sous l'effet de l'aspiration.

Les avantages de l'appareil selon l'invention sont les suivants : il permet de réaliser en une seule opération le traitement par un produit, le peignage, l'aspiration et le brossage des poils, et par conséquent de gagner du temps. Il évite également de polluer l'air environnant. Il permet d'appliquer toute sorte de produits, en particulier des shampoings secs, des insecticides, des produits de traitement de la peau, etc...

Enfin il est également très bien supporté par les animaux et, vu sa facilité d'emploi il permet de faire des traitements plus fréquents et plus rapides.

L'invention sera mieux comprise à l'aide de la description qui va suivre, donnée uniquement à titre d'exemple et faite en se référant aux dessins annexés, sur lesquels :

- la Fig. 1 représente une vue de dessous d'un premier mode de réalisation d'un appareil selon l'invention ;
- la Fig. 2 représente une vue de côté en coupe suivant la ligne A-A de la Fig. 1; et
- la Fig. 3 représente une vue de côté en coupe d'un second mode de réalisation d'un appareil selon l'invention.

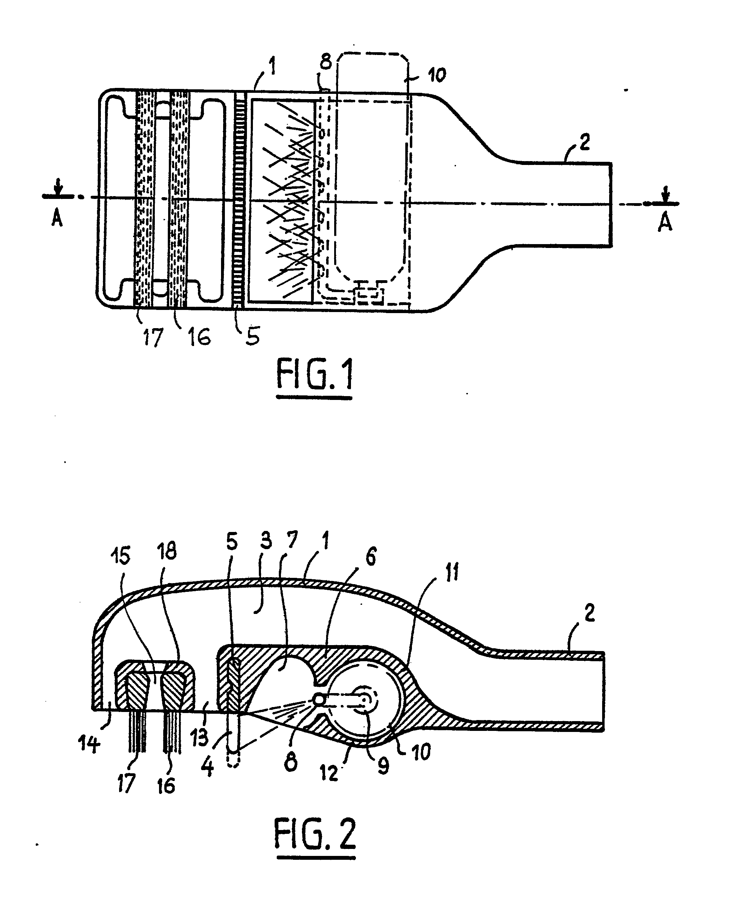

Ainsi qu'on peut le voir sur les Figures 1 et 2, l'appareil selon l'invention comporte un boîtier creux 1 de section approximativement rectangulaire, se terminant par une poignée tubulaire 2 permettant de relier l'appareil à un flexible d'un dispositif d'aspiration. Il comporte également une première chambre d'aspiration 3 et un peigne 4 amovible par coulissement dans une rainure 5 ménagée dans une cloison 6 de l'appareil. Cette cloison délimite une seconde chambre 7 ouverte en avant du peigne et dans laquelle est disposée une rampe de pulvérisation 8 qui permet de diriger sur le peigne et sur le pelage écarté par celui-ci, un brouillard de produit de nettoyage ou de traitement. La rampe 8 est également amovible pour pouvoir choisir un diamètre correct des trous de pulvérisation. Son extrémité est recourbée afin que son embout 9 puisse s'adapter sur le clapet d'un récipient de produit de traitement sous pression 10 encastré dans une troisième chambre 11 du boîtier. L'extrémité du récipient 10 sort du boîtier à proximité de la poignée 2, afin qu'une pression des doigts sur le fond du récipient sous pression permette l'ouverture du clapet et la pulvérisation du produit de traitement en direction du pelage. Un bossage 12 permet de faire reposer l'appareil sur l'animal et de modérer la pénétration du peigne dans le pelage. L'aspiration d'air depuis la chambre 3 se fait par des ouvertures 13, 14 et 15 situées de part et d'autre de brosses 16 et 17 encastrées dans une glissière 18 et également interchangeables par coulissement. La finesse et la raideur des poils de ces brosses sont choisies en fonction du travail à exécuter et de la nature du pelage à soigner.

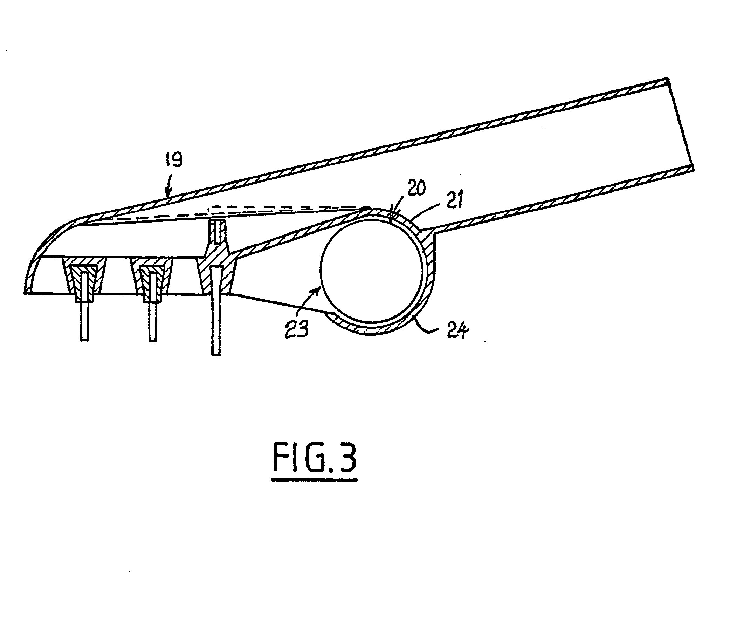

Selon un autre mode de réalisation d'un appareil selon l'invention, représenté sur la Fig. 3, celui-ci comporte également un boîtier 19 et à la place du dispositif de pulvérisation de produit décrit en regard des Figures 1 à 2, une cartouche 20 de produit en poudre ou en gel, comportant un certain nombre d'ouvertures et disposée dans une deuxième chambre 21 de l'appareil, cette chambre étant par exemple ouverte en direction du peigne. Selon un mode de réalisation, les ouvertures de la cartouche 20 sont disposées en regard d'une lumière 23 ménagée dans une paroi 24 de la chambre 21 de manière à permettre de distribuer le produit de traitement en direction des poils et des brosses.

Il est également possible d'introduire dans cette chambre une cartouche de gel solidifié de produit de traitement, l'ouverture en direction des peignes permettant alors, sous l'effet de l'aspiration, de distribuer des molécules contenues dans le gel en direction des poils.

Les autres parties de ce mode de réalisation étant identiques à celles décrites en regard du premier mode de réalisation (Figs. 1 et 2), on ne les décrira pas plus en détail.

**Revendications**

1. Appareil destiné à soigner le pelage des animaux comprenant un boîtier creux (1; 19), un raccord (2) servant de poignée pour liaison à un dispositif d'aspiration, le boîtier creux comportant une première chambre d'aspiration (3) et un peigne (4), caractérisé en ce que le boîtier creux est cloisonné de façon à avoir une deuxième chambre (7; 21) dans laquelle est disposé un dispositif de distribution (10; 20) de produit de traitement avec une sortie en direction du peigne et en ce que lesdites chambres (3; 7; 21) sont complètement séparées et disposées de part et d'autre du peigne de manière que le produit de traitement sortant de la deuxième chambre (7;21) soit aspiré vers le peigne sous l'effet de l'aspiration de la première chambre (3).

2. Appareil selon la revendication 1, caractérisé en ce que le dispositif de distribution de produit de traitement comprend un dispositif de pulvérisation (8; 10) destiné à projeter vers le peigne, en avant de celui-ci, et dans le flux d'air aspiré, un produit de traitement.

3. Appareil selon la revendication 2, caractérisé en ce que le dispositif de pulvérisation (10) comporte une rampe (8) percée de plusieurs orifices, et disposée dans la deuxième chambre (7) du boîtier.

4. Appareil selon la revendication 3, caractérisé en ce que le dispositif de pulvérisation comporte en outre un réservoir de produit de traitement sous pression disposé dans une troisième chambre (11) du boîtier et muni d'un clapet auquel est reliée l'une des extrémités de ladite rampe (8), la chambre de réception de ce dispositif étant disposée à proximité de la poignée de façon à permettre à l'utilisateur d'agir manuellement sur le dispositif de pulvérisation.

5. Appareil selon la revendication 1, caractérisé en ce que le dispositif de distribution de produit de traitement comporte une cartouche (20) de produit se présentant sous forme de poudre ou de gel solidifié, disposée dans la deuxième chambre (21).

6. Appareil selon la revendication 5, caractérisé en ce que ladite cartouche comporte des orifices ménagés en regard d'une lumière (23) pratiquée dans une portion de la paroi (24) de la chambre (21) de manière à permettre une distribution du produit vers le pelage.

7. Appareil selon l'une quelconque des revendications précédentes, caractérisé en ce qu'il comporte, en outre, en arrière du peigne et dans le flux d'air aspiré, au moins une brosse (16, 17) de nettoyage et de lissage du pelage.

8. Appareil selon la revendication 7, caractérisé, en ce que le peigne et la brosse sont amovibles par coulissement de façon à pouvoir les adapter à la nature du pelage à soigner.

9. Appareil selon l'une quelconque des revendications précédentes, caractérisé en ce qu'il comporte un bossage (12) situé en avant du peigne et sous la chambre dans laquelle est placé le dispositif de distribution, de façon à permettre de faire reposer l'appareil sur le pelage pendant les soins et d'éviter un enfoncement exagéré de celui-ci.

**Claims**

1. Apparatur for grooming the coat of animals, comprising a hollow housing (10), a connector (2) acting as a handle for connection to a suction device, the hollow housing having a first suction chamber (3) and a comb (4), characterized in that the hollow housing is partitioned so as to have a second chamber (7, 21) in which is disposed a device (10, 20) for distributing treating product with an outlet in the direction of the comb and in that said chambers (3, 7, 21) are completely separated and located on either side of the comb, so that the treatment product passing out of the second chamber (7, 21) is sucked towards the comb under the suction effect of the first chamber (3).

2. Apparatus according to claim 1, characterized in that the treating product distributing device comprises a spraying device (8, 10) for spraying a treating product towards the comb, in front of the latter, and in the stream of aspirated air.

3. Apparatus according to claim 2, characterized in that the spraying device (10) comprises a distributor tube (8) provided with a plurality of orifices and disposed in the second chamber (7) of the housing.

4. Apparatus according to claim 3, characterized in that the spraying device further comprises a tank of treating product under pressure disposed in a third chamber (11) of the housing and provided with a valve to which one of the ends of said distributor tube (8) is connected, the chamber receiving said spraying device being located in the vicinity of the comb to enable the user to act manually on the spraying device.

5. Apparatus according to claim 1, characterized in that the treating product distributing device comprises a cartridge (20) of product in the form of a power or a solidified gel disposed in the second chamber (21).

6. Apparatus according to claim 5, characterized in that said cartridge has orifices arranged in facing relation to an opening (23) provided in a portion of the wall (24) of chamber (21) to permit a distribution of the product toward the coat.

7. Apparatus according to any one of the preceding claims, characterized in that it comprises, at the rear of the comb and in the stream of aspirated air, at least one brush for cleaning and smoothing the coat.

8. Apparatus according to claim 7, characterized in that the comb and the brush are removable by sliding so as to permit adapting them to the type of coat to be groomed.

9. Apparatus according to any one of the preceding claims, characterized in that it comprises a boss (12) located in front of the comb and below the chamber in which the distributing device is disposed to permit the laying of the apparatus on the coat during the grooming operation and the avoidance of excessive penetration of the apparatus into the coat.

**Patentansprüche**

1. Gerät zur Pflege von Tierfellen, mit einem Hohlgehäuse (1; 19), einem als Griff dienenden Anschlußstück (2) zur Verbindung mit einer Saugeinrichtung, wobei das Hohlgehäuse eine erste Saugkammer (3) und einen Kamm (4) aufweist, dadurch gekennzeichnet, daß das Hohlgehäuse zur Bildung einer zweiten Kammer (7; 21) unterteilt ist, in welcher sich eine Verteileinrichtung (10; 20) mit einem Auslaß in Richtung auf den Kamm zur Verteilung eines Behandlungsproduktes befindet, und daß die genannten Kammern (3; 7, 21) vollständig voneinander getrennt und zu beiden Seiten des Kamms dergestalt angeordnet sind, daß das aus der zweiten Kammer (7; 21) austretende Behandlungsprodukt unter der Saugwirkung der ersten Kammer (3) in Richtung auf den Kamm gesaugt wird.

2. Gerät nach Anspruch 1, dadurch gekennzeichnet, daß die Einrichtung zur Verteilung des Behandlungsproduktes eine Zerstäubereinrichtung (8; 10) zum Aufstäuben eines Behandlungsproduktes in Richtung auf den Kamm vor diesem, und in dem Saugluftstrom, aufweist.

3. Gerät nach Anspruch 2, dadurch gekennzeichnet, daß die Verteileinrichtung (10) eine mit mehreren Öffnungen versehene Galerie (8) aufweist, welche in der zweiten Kammer (7) des Gehäuses angeordnet ist.

4. Gerät nach Anspruch 3, dadurch gekennzeichnet, daß die Zerstäubereinrichtung ferner einen unter Druck stehenden Behälter mit Behandlungsprodukt aufweist, welcher sich in einer dritten Kammer (11) des Gehäuses befindet und mit einer Verschlußklappe versehen ist, mit welcher eines der Enden der Galerie (8) verbunden ist, wobei die Aufnahmekammer für diese Einrichtung sich in der Nähe des Griffes befindet, um es der Bedienungsperson zu ermöglichen, die Zerstäubungseinrichtung manuell zu bedienen.

5. Gerät nach Anspruch 1, dadurch gekennzeichnet, daß die Einrichtung zur Verteilung von Behandlungsprodukt ein in der zweiten Kammer (21) angeordnetes Magazin (20) für das in Pulverform oder als verfestigtes Gel vorliegende Produkt aufweist.

6. Gerät nach Anspruch 5, dadurch gekennzeichnet, daß das genannte Magazin Öffnungen gegenüber einem Durchlaß (23) aufweist, welcher in einem Teil der Wandung (24) der Kammer (21) so vorgesehen ist, daß eine Verteilung des Produkts in Richtung auf das Fell ermöglicht wird.

7. Gerät nach einem der vorangehenden Ansprüche, dadurch gekennzeichnet, daß dieses darüber hinaus hinter dem Kamm und in dem Saugluftstrom mindestens eine Bürste (16, 17) zum Reinigen und Glätten des Fells aufweist.

8. Gerät nach Anspruch 7, dadurch gekennzeichnet, daß Kamm und Bürste gleitend beweglich sind, um sich der Beschaffenheit des der Pflege zu unterwerfenden Fells anzupassen.

9. Gerät nach einem der vorangehenden Ansprüche, dadurch gekennzeichnet, daß dieses eine Ausbauchung (12) vor dem Kamm und unter der Kammer aufweist, in welcher sich die Verteileinrichtung befindet, um ein Aufliegen des Geräts auf dem Fell während des Pflegevorgangs zu ermöglichen und um ein übermäßiges Eindringen des Geräts in dieses zu vermeiden.

FIG.1

FIG.2

## FIG.3